# EUROPEAN PATENT APPLICATION

(11) **EP 0 632 655 A2**
(43) Date of publication of application: **04.01.1995**
(21) Application number: 94304704.3
(22) Date of filing: 28.06.1994
(51) Int. Cl.: H04N 7/10

(54) **Television apparatus**

(30) Priority: 29.06.1993 GB 9313396
(71) Applicant: LINK RESEARCH LIMITED, Watford, Hertfordshire WD1 8SB (GB)
(72) Inventor: Mann, David, Gerrards Cross, Buckinghamshire SL9 9LB (GB); Mann, Leonard Graham, Gerrards Cross, Buckinghamshire SL9 8PX (GB)
(74) Representative: Coles, Graham Frederick

(57) **Abstract**

Reception-channel switching of a broadcast television set (1) is effected via a unit (4) that interfaces the set (1) with remote distribution equipment (13) of a cable network. Viewing-channel selection is communicated from a hand-held control (2) to an infra-red receiver (7) of the unit (4). The selection made is processed by a microprocessor (9) and associated memory (8) to derive control signals that are transmitted from an LED (11) to the infra-red receiver (6) of the set (1), to switch the set (1) to the appropriate reception channel. If a cable channel is selected from the control (2), the microprocessor (9) also supplies command signals to a microprocessor (16) which controls a tuner (12) of the distribution equipment (13) to select the relevant channel signal. The selected signal is supplied to the set (1) via an input cable (5) to the unit (4), and this same cable (5) is used for transmission of the command signal from the unit (4) to the equipment (13).

## Description

This invention relates to television apparatus.

The invention is especially concerned with television apparatus for use in combination with television broadcast receiving sets to facilitate control of operation of such sets.

Television broadcast receiving sets are conventionally constructed to be switchable between a number of reception channels that is normally adequate for reception of off-air television stations alone, but is generally inadequate where enhanced services, such as cable or satellite television systems are to be utilised also. The inadequacy is generally overcome by arranging that one of the reception channels of the television set is specifically allocated to reception of the enhanced-service signals, and that selection of the particular channel of the enhanced service which is to be input to the set in the allocated channel, is made through a separate control unit. Accordingly, in order to select one of the enhanced-service channels it is normally necessary to make two selections, one in the television set to switch it to the allocated reception channel, and the other in the enhanced-service control unit to select the enhanced-service channel required.

The need to make two selections, one in the set and the other in the control unit, is of significant disadvantage and for many is especially confusing and burdensome where the television set and the control unit are of the kind that are switched using hand-held remote-controls. Separate remote-controls are normally required, one to control channel selection, standby and adjustment functions of the television set, and the other for channel selection within the enhanced-service control unit. Even where a single, universal hand-control is available, it must nonetheless be used to signal to the set for some functions and to the control unit for others.

It is one of the objects of the present invention to provide television apparatus by which the above disadvantages may be overcome.

According to the present invention there is provided television apparatus for use in combination with a broadcast television receiving set, characterised in that said apparatus includes data processing means and associated memory and is operative to control reception-channel switching in the set in accordance with a selection communicated as an input to said apparatus, and to supply to the set a television signal for reception in the selected reception channel, the television signal supplied in this latter respect being, in dependence upon response of the processing means to the input selection, selected within the apparatus from a multiplicity of such signals supplied to the apparatus.

The apparatus may include an infra-red or other remote-control facility for receiving control signals transmitted thereto in the communication of said input selection to the apparatus, the data processing means being operative to exercise said control of reception-channel switching in dependence upon the control signals received by the remote-control facility.

Selection of the television signal for supply to the set may be made by a tuner or other signal-channel selector which is switched in accordance with command signals derived by the processing means in dependence upon the input selection communicated to said apparatus. The processing means and its associated memory may be part of a unit for interfacing the television set with television-signal distribution equipment that includes the tuner or other signal-channel selector.

The television apparatus may be used in combination with a broadcast television receiving set that includes an infra-red or other remote-control facility, and in these circumstances the apparatus may conveniently be operative to exercise the control of reception-channel switching in the set via that remote-control facility.

According to a feature of the present invention there is provided television apparatus that includes a broadcast television receiving set having an infra-red remote-control receiver for controlling reception-channel switching in the set in accordance with infra-red signals received by the remote-control receiver, characterised in that it also includes a unit for interfacing the television set with a cable and/or satellite television network, said unit including an infra-red transmitter that is operable to transmit infra-red signals to the infra-red receiver of the set, means for input of data to the unit, and data processing means and associated memory for processing the received input data and in dependence thereon derive control signals for transmission to the set via the remote-control transmitter to switch the set to a selected reception channel and command signals for selection of a television signal from the network for supply to the set in the selected reception channel.

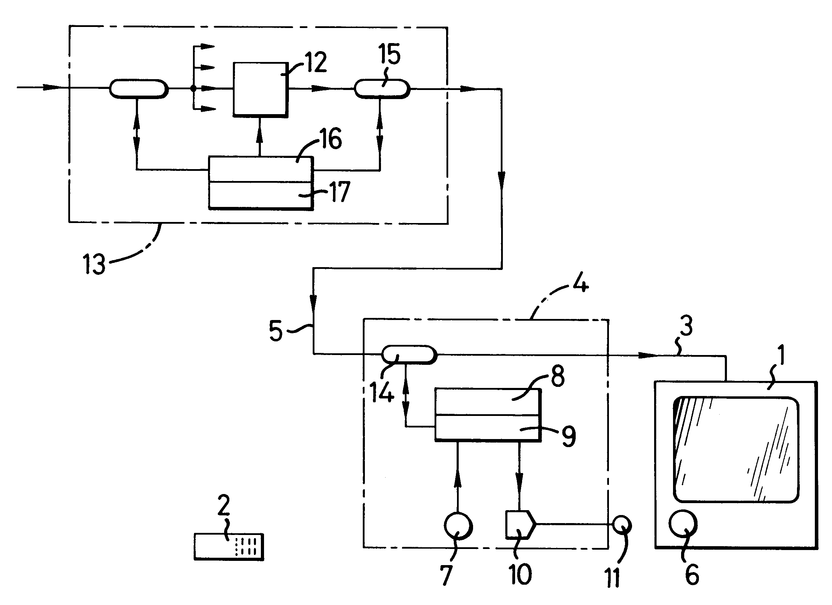

A television system that includes apparatus according to the present invention will now be described, by way of example, with reference to the accompanying drawing. The drawing shows the television system in block schematic form.

The system to be described is one in which a householder-user is able to select both off-air and cable television services; provision may readily be made to include satellite television channels in the range of selection in addition to, or as an alternative to, cable.

Referring to the drawing, the household broadcast television receiving set 1 is operated in accordance with selection made using a hand-held remote control 2. Viewing-channel selection is made with the control 2 from among the off-air and cable services receivable at the set 1 via a cable output 3 of a home-interface unit 4 connected to a cable network. The off-air channel signals may be supplied to the unit 4 via the input cable 5 to it from the cable network, or from an aerial (not shown) that is looped through the unit 4 onto the output 3.

The set 1 incorporates a conventional infra-red receiver 6 for remote-control operation, however, it is not to this that infra-red signalling by the hand-control 2 is directed, but rather to an infra-red receiver 7 of the home-interface unit 4. All control operations for off-air channel selection, picture and sound adjustments and standby functions of the set 1, as well as those for cable channel and teletext selection, are made via the receiver 7 from the single control 2. This is in contrast with what applies in comparable known systems, in that separate hand-controls are normally required, one to act upon the receiver 6 to control off-air channel selection, switching of the set 1 to a single reception channel allocated for cable use, and set-adjustments and standby functions, and another to act via a receiver corresponding to the receiver 7, to control which of the available cable channels is selected for reception in the cable-allocated reception channel. Even where a single, universal hand-control is available, it must nonetheless be used to signal to the television receiver for some functions and to the cable unit for others. The disadvantages of plural hand-held controls and/or the need to signal some functions to the set and others to another unit, are overcome with the present system.

To this end, the unit 4 of the present system includes a memory 8 and a microprocessor 9 together with a control-signal transmitter 10. The microprocessor 9 supplies command signals to the transmitter 10 which energises a light-emitting diode (LED) 11 that is located in close optical communication with the receiver 6 of the set 1. More particularly, the microprocessor 9 decides in accordance with data stored in the memory 8, which reception channel of the set 1 is appropriate for the channel selection signalled to the unit 4 by the hand control 2. It then activates the transmitter 10 to energise the LED 11 to transmit infra-red signals to the receiver 6 for switching the set 1 to the appropriate reception channel.

In the case where the selection through the hand control 2 is of an off-air channel, operation is generally straightforward in that the receiver 6 will normally be actuated from the unit 4 to switch the set 1 to the same reception channel as selected at the hand control 2. Where on the other hand, a cable channel is selected at the hand control 2, the microprocessor 9 activates the transmitter 10 to switch the set 1 to the channel allocated within the set 1 for cable reception. In addition it causes signals of the cable channel selected to be supplied to the set 1 via the cable 3 for reception in the cable-allocated reception channel. It may do this by switching a tuner that is located within the unit 4 itself. However, in the present example illustrated in the drawing, the cable-channel signal-selection is made by switching a tuner 12 individual to the household, that is located within remote distribution equipment 13 common to a number of households within the cable network. (Although a tuner is used in this example, other forms of channel selector using, for example, interdiction or trap filtering techniques, may be used.)

The unit 4 communicates its switching commands to the tuner 12 via the cable 5. More particularly, the microprocessor 9 is connected to a communications coupler 14 in the cable 5, and the switching commands it sends are received in the equipment 13 from the cable 5 via a coupler 15. A microprocessor 16 responds to the received signals to switch the tuner 12 to the channel appropriate to the selection of cable channel made at the control 2.

The equipment 13 includes memory 17 which retains data relating to the full range of cable channels available for selection by the household. The microprocessor 16 checks each selection of cable channel made and communicated to it from the unit 4, to determine whether that selection is valid; for example, whether that channel is operative, or whether payment of a premium has been made. If it is valid, the appropriate switching of the tuner 12 to give effect to the selection is made, but if it is not, a message to that effect is transmitted to be displayed by the set 1. The microprocessor 16 may communicate via the cable 5 with the microprocessor 9 to switch the set 1 to teletext operation for such display.

Where a viewer is required to agree to payment of a special premium before viewing a particular cable channel, the selection of that channel is detected by the microprocessor 16 to cause an appropriate request for agreement to pay to be displayed by the set 1. If in response to this the viewer operates the control 2 to signify agreement and, say, to identify a credit card account to be debited with the relevant sum, this data is transmitted from the microprocessor 9 to the microprocessor 16 for storage in memory 17 and to give effect to the appropriate switching of the tuner 12.

The memory 17 stores a look-up table giving whatever information concerning operation of different makes of television set is required to enable the home-interface unit 4 to operate correctly in its control of the specific set 1 to which it is connected. The unit 4 communicates with the equipment 13 to identify (for example, in accordance with data entered into the memory 8 by operation of the control 2 on installation of the unit 4) the make of the set and to receive the necessary data for adapting operation of the unit 4 for compatibility. The table may be stored in the memory 8 or in the memory 17; there is an obvious economy of sharing if it is stored in the memory 17 and is thereby made available to the interface units of other homes.

The principle of operation described above for adapting the television set 1 to receive cable services may be applied to operation of a VCR in conjunction with the television set. In this way the conventional need for two remote controls and/or the need to signal some functions to the set and some to the VCR can be readily avoided. Furthermore, the invention may find application in menu-driven subscriber functions, including interactive data operations.

## Claims

1. Television apparatus for use in combination with a broadcast television receiving set (1), characterised in that said apparatus includes data processing means (9) and associated memory (8) and is operative to control reception-channel switching in the set (1) in accordance with a selection communicated as an input (at 7) to said apparatus, and to supply to the set (1) a television signal for reception in the selected reception channel, the television signal supplied in this latter respect being, in dependence upon response of the processing means (9) to the input selection, selected (at 12) within the apparatus from a multiplicity of such signals supplied to the apparatus.

2. Apparatus according to Claim 1 including an infrared or other remote-control facility (7) for receiving control signals transmitted thereto (from 2) in the communication of said input selection to the apparatus, and wherein the data processing means (9) is operative to exercise said control of reception-channel switching in dependence upon the control signals received by the remote-control facility (7).

3. Apparatus according to Claim 1 or Claim 2 wherein selection of the television signal for supply to the set (1) is made by a tuner or other signal-channel selector (12) which is switched in accordance with command signals that are derived by the processing means (9) in dependence upon the input selection communicated to said apparatus.

4. Apparatus according to Claim 3 wherein the processing means (9) and its associated memory (8) are part of a unit (4) for interfacing the television set (1) with television-signal distribution equipment (13) that includes the tuner or other signal-channel selector (12), and wherein the interfacing unit (4) includes means (7) that is operable for communicating said input selection to the apparatus, and means (14) for transmitting the command signals from the interfacing unit (4) to the distribution equipment (13).

5. Apparatus according to Claim 4 wherein the television signal selected by the tuner or other signal-channel selector (12) for supply to the set (1) is supplied to the interfacing unit (4) via a cable (5) for onward supply to the set (1), and wherein said command signals are supplied from the interfacing unit (4) to the distribution equipment (13) via the same cable (5).

6. Apparatus according to any one of Claims 1 to 5 in combination with a broadcast television receiving set (1) that includes an infra-red or other remote-control facility (6), wherein said apparatus is operative to exercise said control of reception-channel switching via the remote-control facility (6) of the set (1).

7. Television apparatus which includes a broadcast television receiving set (1) having an infra-red remote-control receiver (6) for controlling reception-channel switching in the set (1) in accordance with infra-red signals received by the remote-control receiver (6), characterised in that the apparatus also includes a unit (4) for interfacing the television set (1) with a cable and/or satellite television network, said unit (4) including an infra-red transmitter (10,11) that is operable to transmit infra-red signals to the infra-red receiver (6) of the set (1), means (7) for input of data to the unit (4), and data processing means (9) and associated memory (8) for processing the received input data and in dependence thereon derive control signals for transmission to the set (1) via the remote-control transmitter (10,11) to switch the set (1) to a selected reception channel and command signals for selection of a television signal from the network for supply to the set (1) in the selected reception channel.

8. Apparatus according to Claim 7 wherein said means for the input of data to the unit (4) is an infra-red remote-control facility (7).
